# EUROPÄISCHE PATENTSCHRIFT

(11) **EP 2 582 511 B1**
(45) Veröffentlichungstag und Bekanntmachung des Hinweises auf die Patenterteilung: **05.04.2017**
(21) Anmeldenummer: 11776329.2
(22) Anmeldetag: 16.06.2011
(51) Int. Cl.: B29C 70/44, B29C 33/50

(54) **STÜTZPROFIL UND VERFAHREN ZUR HERSTELLUNG EINES STÜTZPROFILS**
SUPPORTING PROFILED ELEMENT AND METHOD FOR PRODUCING A SUPPORTING PROFILED ELEMENT
PROFILÉ SUPPORT ET PROCÉDÉ DE FABRICATION D'UN PROFILÉ SUPPORT

(30) Priorität: 17.06.2010 DE 102010024120
(43) Veröffentlichungstag der Anmeldung: 24.04.2013
(73) Patentinhaber: Premium AEROTEC GmbH, 86179 Augsburg (DE)
(72) Erfinder: BÜRKNER, Steffen, 80339 München (DE); SCHOLLER, Jochen, 86845 Großaitingen (DE); HANSEN, Erik, 86179 Augsburg (DE)
(74) Vertreter: Isarpatent
(86) Internationale Anmeldenummer: PCT/DE2011/001346
(87) Internationale Veröffentlichungsnummer: WO 2012/010134

(56) Entgegenhaltungen:
- WO-A1-2008/015115
- WO-A1-2011/055524
- FR-A1- 2 924 375
- US-A1- 2010 186 899

## Beschreibung

Die vorliegende Erfindung betrifft ein Stützprofil nach dem Oberbegriff des Anspruchs 1, ein Verfahren zur Herstellung eines Stützprofils nach dem Oberbegriff des Anspruchs 9 sowie ein Verfahren zur Herstellung eines verstärkten Fahrzeugrumpfbauteils nach dem Oberbegriff des Anspruchs 10.

Ein Stützprofil der hier interessierenden Art ist z. B. aus der DE 101 56 123 B4 bekannt. Dieses Stützprofil dient zum Abstützen eines von einem Faserverbundhalbzeug gebildeten Verstärkungsprofils in einem Aushärteprozess eines Verfahrens zur Herstellung eines durch das Verstärkungsprofil versteiften Beplankungselements (z. B. für ein Luftfahrzeug). Bei diesem Aushärteprozess wird das Verstärkungsprofil an einer Oberfläche des ebenfalls von einem Faserverbundhalbzeug gebildeten Beplankungselementes angebunden (so genanntes "Co-Bonding" bzw. "Co-Curing").

Ganz allgemein ergibt sich die Notwendigkeit eines derartigen Stützprofils immer dann, wenn aufgrund der Formgestaltung des anzubindenden Verstärkungsprofils die Gefahr einer Verformung des Verstärkungsprofils während des Aushärteprozesses besteht. Zu bedenken ist hierbei, dass bei derartigen Verfahren der Faserverbundtechnologie das "Substrat" (z. B. Rumpfschale eines Fahrzeugrumpfbauteils) zusammen mit den daran anzubindenden Verstärkungsprofil zumeist in eine von außen unter Druck gesetzte Umhüllung eingebracht werden.

Eine solche Verformung des Verstärkungsprofils kann durch das parallel zum Verstärkungsprofil verlaufende und wenigstens bereichsweise daran anliegende Stützprofil vermieden werden.

Im Hinblick auf den mit der Faserverbundtechnologie beabsichtigten Vorteil einer hohen spezifischen Festigkeit des herzustellenden Faserverbundbauteils ist ein bei der Herstellung verwendetes Stützprofil nach erfolgter Aushärtung und Verbindung der Faserverbundhalbzeuge wieder zu entfernen. Bei der in der DE 101 56 123 B4 beschriebenen Herstellung des Faserverbundbauteils kann das hierbei verwendete Stützprofil nach erfolgter Aushärtung der Faserverbundhalbzeuge z. B. seitlich aus einem Zwischenraum des etwa C-förmigen Verstärkungsprofils herausgezogen werden. Das Stützprofil könnte z. B. aus Metall (z. B. Aluminium), z. B. als gefrästes Metallteil gefertigt sein.

Abweichend davon sind jedoch auch Formgestaltungen bzw. Anordnungen von Verstärkungsprofilen bei einem solchen Aushärtungsprozess denkbar, welche es nach erfolgter Aushärtung nicht zulassen, dass das Stützprofil seitwärts (quer zur Längsrichtung des Verstärkungsprofils) entfernt wird, weil es in dieser Richtung zwischen dem Substrat und dem Verstärkungsprofil "gefangen" ist.

Insbesondere in einem solchen Fall kann vorgesehen sein, dass das Stützprofil nach erfolgter Aushärtung von Substrat und Verstärkungsprofil nicht in Querrichtung sondern in Längsrichtung des Verstärkungsprofils herausgezogen wird. Dies setzt in vielen Fällen jedoch voraus, dass das Stützprofil nicht aus einem festen Werkstoff wie z. B. Aluminium sondern aus einem flexiblen Werkstoff gefertigt ist, um eine für das Herausziehen erforderliche Biegsamkeit des Stützprofils zu gewährleisten. Insbesondere bei der Herstellung von kompliziert gekrümmten Fahrzeugrumpfbauteilen (z. B. Beplankungsfeldem von Flugzeugen etc.) wird daher oftmals ein flexibles Stützprofil benötigt.

Von der Fa. "Rubbercraft Corporation of California", USA werden derartige flexible, aus einem Elastomermaterial gefertigte Stützprofile bzw. einstückige Blasen bis zu 14,6 m Länge (engl. "single piece bladders up to 48' in length") zur Verwendung bei der Herstellung von Verbundstrukturen und Verbundbauteilen angeboten (Internetseite "www.rubbercraft.com/tooling.htm" am 10. Mai 2010). Beim Einsatz solcher für eine ganz bestimmte Anwendung maßgeschneidert gefertigten Stützprofite werden diese mehr oder weniger stark in Mitleidenschaft gezogen, so dass diese in der Regel allenfalls einige wenige Male für eine Bauteilherstellung der hier interessierenden Art eingesetzt werden können. Dementsprechend ergeben sich insbesondere bei einer Serienfertigung von Fahrzeugrumpfbauteilen, die jeweils mit einem oder mehreren Verstärkungsprofilen versehen werden, entsprechend hohe Kosten für die Bereitstellung der benötigten Anzahl an Stützprofilen.

Die Druckschrift WO 2008/015115 offenbart ein Stützprofil gemäß dem Oberbegriff des Anspruchs 1. ist eine Aufgabe der vorliegenden Erfindung, ein einfach und kostengünstig bereitstellbares Stützprofil der eingangs genannten Art anzugeben, welches insbesondere bei der Herstellung eines verstärkten Fahrzeugrumpfbauteils in Faserverbundtechnologie vorteilhaft verwendbar ist.

Das erfindungsgemäße Stützprofil gemäß Anspruch 1 umfasst einen luftundurchlässigen Profilschlauch und wenigstens ein Endstück, welches an einem der beiden Profilschlauchenden lösbar eingesteckt und mittels dieser Steckverbindung gegen den Profilschlauch abgedichtet ist. Falls nur an einem Profilschlauchende ein solches Endstück eingesteckt ist, so kann das andere Profilschlauchende z. B. durch eine Verschweißung oder Verklebung von Profilschlauchmaterial verschlossen und somit abgedichtet sein.

In einer besonders bevorzugten Ausführungsform umfasst das erfindungsgemäße Stützprofil jedoch an den beiden Profilschlauchenden lösbar eingesteckte und mittels dieser Steckverbindung gegen den Profilschlauch abgedichtete Endstücke. Mit der Verwendung eines Profilschlauches kann eine für die jeweilige Anwendung ausreichende Flexibilität des Stützprofils erzielt werden, abhängig von der Formgestaltung (z. B. Wandstärke) und der Art des Profilschlauchmaterials. Bevorzugt ist der Profilschlauch aus Polymermaterial (z. B. Silikon) gefertigt, beispielsweise extrudiert. Zur Herstellung des Schlauches können ein oder mehrere Materialen (z. B. in einem Koextrusionsprozess) verarbeitet werden. Insbesondere kann der Schlauch z. B. an seiner Oberfläche zur Ausbildung einer "Funktionsschicht" (Antihaftschicht) speziell behandelt und/oder aus einem besonderen Material ausgebildet sein, welches sich von einem darunterliegenden Material unterscheidet. Damit kann ein späteres Abgleiten des Schlauches vom ausgehärteten Matrixmaterial beim Entfernen des Stützprofils nach Abschluss des Aushärtungsprozesses vereinfacht werden. Die Oberfläche kann z. B. von einer Fluorpolymerschicht gebildet sein. Auch kann auf an sich bekannte Maßnahmen zur mechanischen Verstärkung des Schlauches zurückgegriffen werden, etwa indem eine oder mehrere Verstärkungslagen (z. B. Fasergeflechte etc.) oder andere Armierungselemente in ein flexibles Schlauchmaterial eingebracht werden.

Das oder die lösbar (an einem oder beiden Profilschlauchenden) eingesteckten Endstücke können demgegenüber aus einem festeren Material, bevorzugt z. B. einem metallischen Material wie z. B. Aluminium gefertigt sein. Durch die mittels dieser Steckverbindung realisierte Abdichtung zwischen dem Profilschlauch und dem/den Endstück(en) kann während des Aushärteprozesses vorteilhaft ein bestimmter Druck im Schlauchinnenraum aufrechterhalten oder eingestellt werden, was die Formstabilität des Stützprofils gewährleistet bzw. erhöht.

Wie es weiter unten bei der Beschreibung von Ausführungsbeispielen noch erläutert wird, muss die mittels der Steckverbindung als solcher realisierte Abdichtung keineswegs "perfekt" in dem Sinne sein, dass diese Abdichtung einer beim späteren Aushärteprozess sich ergebenden (Luft)-Druckdifferenz zwischen Schlauchinnenraum und Schlauchaußenraum im Wesentlichen standhält. Vielmehr genügt es, wenn letzteres Ausmaß an Abdichtwirkung erst im Aushärteprozess selbst erreicht wird, indem die Profilschlauchenden hierbei ausreichend stark gegen die davon umgriffenen Abschnitte der Endstücke gepresst werden.

Die für den Profilschlauch und das oder die Endstücke verwendeten Materialien sind so zu wählen, dass diese den im Aushärteprozess zu erwarteten Bedingungen standhalten. Bei gängigen Aushärteprozessen für Faserverbundbauteile auf Epoxidharzbasis werden z. B. Maximaltemperaturen erreicht, die typischerweise im Bereich von etwa 150 bis 250 °C liegen.

Die erfindungsgemäß vorgesehene lösbare Steckverbindung zwischen Profilschlauchende(n) und Endstück(en) besitzt den in der Praxis besonders gravierenden Vorteil, dass zumindest jedes Endstück (bei entsprechender Ausgestaltung) wiederverwendet werden kann, und dass mit einem solchen, gegebenenfalls bereits vielfach verwendeten Endstück in einfacher und kostengünstiger Weise, nämlich durch einfaches Einstecken in ein Profilschlauchende (eines z. B. neuen Profilschlauches), ein für einen weiteren Bauteil-Fertigungsprozess wieder verwendbares Stützprofils bereitgestellt werden kann. Vor allem wenn an beiden Profilschlauchenden jeweils ein Endstück vorgesehen ist, so ist es von großem Vorteil, dass ein und dieselben Endstücke zur Bereitstellung verschieden langer Stützprofile verwendet werden können (Die Länge des Stützprofils wird durch die Länge des zur Stützprofilbildung verwendeten Profilschlauches bestimmt).

Der Querschnitt (Profil) des Stützprofile ist dem betreffenden Anwendungsfall angepasst zu wählen. Dieser Querschnitt kann insbesondere aus geradlinig verlaufenden Querschnittsabschnitten zusammengesetzt, z. B. trapezförmig oder rechteckig, aber auch z. B. mit einem oder mehreren gekrümmt verlaufenden Querschnittsabschnitten vorgesehen sein.

Zur Abstützung eines Verstärkungsprofils in Form eines so genannten Omegaprofils kann z. B. vorteilhaft ein trapezförmiges Stützprofil eingesetzt werden. Zur Abstützung eines C-Verstärkungsprofils taugt z. B. ein rechteckiges Stützprofil. Zur Abstützung eines Doppel-T-Verstärkungsprofils können z. B. beiderseits davon angeordnete rechteckige Stützprofile verwendet werden.

Falls das in Faserverbundtechnologie herzustellende Faserverbundbauteil mit mehreren verschiedenartigen Verstärkungsprofilen an einem (flächigen) Substrat zu versehen ist, so können dementsprechend auch verschiedene, jeweils an die Formgestaltung und Anordnung der Verstärkungsprofile angepasste Stützprofile eingesetzt werden.

Mit dem erfindungsgemäßen Stützprofil kann vorteilhaft auch ein so genannter "Druckschatten" vermieden werden.

Das erfindungsgemäße Stützprofil kann insbesondere zum Abstützen eines von einem Faserverbundhalbzeug gebildeten Verstärkungsprofils in einem Aushärteprozess eines Verfahrens zur Herstellung eines Fahrzeugrumpfbauteils (insbesondere Luftfahrzeug-Rumpfbauteil) verwendet werden, bei welchem das (wenigstens eine) Verstärkungsprofil an einer Oberfläche einer von einem weiteren Faserverbundhalbzeug gebildeten Rumpfschale angebunden wird (so genanntes "Co-Bonding" bzw. "Co-Curing").

Dabei ist insbesondere an die Fertigung, z. B. Serienfertigung, von Rumpfbauteilen gedacht, bei denen die Rumpfschale eine Fläche von mehreren Quadratmetern und/oder eine Ausdehnung zumindest in einer Richtung von mehreren Metern besitzt.

Der hier verwendete Begriff "Faserverbundhalbzeug" bezeichnet ein Material umfassend Fasern, welche spätestens nach Abschluss des Aushärteprozesses in einem (ausgehärteten) Matrixmaterial eingebettet sind und dieses Matrixmaterial verstärken und somit zusammen mit dem Matrixmaterial einen "Faserverbundwerkstoff" ausbilden. Das Faserverbundhalbzeug kann z. B. ein Gewebe, ein Gelege, eine Fasermatte oder dergleichen sein oder ein derartiges Textil enthalten.

Als Matrixmaterial kann insbesondere ein duroplastischer Kunststoff wie z. B. Epoxidharz vorgesehen sein. Jedes bei der Erfindung verwendete Faserverbundhalbzeug kann z. B. als "trockenes" Fasermaterial vorgesehen sein. Alternativ kann das Faserverbundhalbzeug auch bereits mit dem Matrixmaterial (z. B. Kunstharzsystem) "vorimprägniert" sein (z. B. so genanntes "Prepreg").

Dementsprechend kann bei dem vorstehend erläuterten Verfahren zur Herstellung eines Fahrzeugrumpfbauteils die Rumpfschale und/oder das Verstärkungsprofil vor dem Aushärteprozess als bereits vorimprägniertes Faserverbundhalbzeug vorliegen. Die Aushärtung eines solchen Prepregs kann z. B. thermisch (bei erhöhter Temperatur) erfolgen.

Falls die Rumpfschale oder das Verstärkungsprofil jedoch als zunächst "trockenes" Faserverbundhalbzeug vorliegt, so muss dieses vor der eigentlichen Aushärtung erst noch mit dem betreffenden Matrixmaterial infiltriert werden. Diese Infiltration kann z. B. in demselben Werkzeug bzw. derselben Anordnung durchgeführt werden, in welcher auch die (nachfolgende) eigentliche Aushärtung durchgeführt wird.

Der hier verwendete Begriff "Aushärteprozess" soll dementsprechend auch einen Prozess umfassen, bei welchem der eigentlichen Aushärtung im engeren Sinne ein Infiltrationsschritt vorausgeht, bei welchem insbesondere nicht vorimprägnierte Verstärkungsprofile und/oder eine nicht vorimprägnierte Rumpfschale noch mit dem Matrixmaterial (z. B. Epoxidharzsystem) infiltriert wird.

Prinzipiell kann das erfindungsgemäße Stützprofil für die Herstellung von Faserverbundbauteilen enthaltend beliebige, insbesondere an sich bekannte Faserwerkstoffe und Matrixwerkstoffe verwendet werden.

Als Fasern kommen beispielsweise Glasfasern, Kohlenstofffasern, synthetische Kunststofffasern, Stahlfasern oder Naturfasern in Betracht.

Als Matrixmaterial sind insbesondere Kunststoffe wie z. B. duroplastische Kunststoffe (Kunstharze) interessant. In einer speziellen Ausführungsform wird das Stützprofil zur Herstellung eines Kohlenstofffaser-verstärkten Kunststoffbauteils (CFK-Bauteil) verwendet, insbesondere mit einer Matrix auf Epoxidharzbasis.

In einer bevorzugten Ausführungsform des erfindungsgemäßen Stützprofils setzt ein aus dem Profilschlauchende ragender Außenabschnitt wenigstens eines der Endstücke das Schlauchprofil bündig fort. Dies besitzt insbesondere Vorteile im Zusammenhang mit der Verwendung einer luftundurchlässigen Folie, die beim Aushärteprozess über das/die Verstärkungsprofil(e) gelegt wird.

In diesem Zusammenhang ist es auch von Vorteil, wenn ein aus dem Profilschlauchende ragender Außenabschnitt eines Endstückes Schrägflächen zur Auflage einer solchen im Aushärteprozess verwendeten luftundurchlässigen Folie besitzt.

In einer Ausführungsform ist vorgesehen, dass ein aus dem Profilschlauchende ragender Außenabschnitt des bzw. wenigstens eines der Endstücke mit einer Luftdurchtrittsöffnung zur Beaufschlagung des Schlauchinnenraumes beim Aushärteprozess mit einem vorbestimmten Druck versehen ist.

Diese Öffnung umfasst bevorzugt eine Gewindebohrung zum Einschrauben einer passenden hülsenartigen Luftdurchtrittsschraube, welche beim Aushärteprozess die Druckbeaufschlagung des Schlauchinnenraumes durch eine Öffnung (Loch) einer flächig am Außenabschnitt anliegenden luftundurchlässigen Folie hindurch ermöglicht. Die Luftdurchtrittsschraube kann hierbei zur abdichtenden Fixierung der Folie (zwischen einem Schraubenkopf und dem erwähnten Außenabschnitt) dienen.

In einer bevorzugten Ausführungsform ist vorgesehen, dass ein in das Profilschlauchende ragender Innenabschnitt eines Endstückes mit wenigstens einem Dichtring zur Abdichtung gegen das aufgesteckte Profilschlauchende versehen ist. Ein solcher Dichtring kann z. B. aus einem Elastomermaterial gebildet sein. In einer bevorzugten Ausführung ist der Dichtring aus einem Silikonmaterial gefertigt.

In einer bevorzugten Weiterbildung ist der Dichtring in eine am Endstück ausgebildete Umfangsnut eingelegt.

Zur Verbesserung der Dichtwirkung kann auch vorgesehen sein, dass mehrere Dichtringe am Endstück vorgesehen sind, beispielsweise jeweils eingelegt in eine von mehreren Nuten, die in Längsrichtung des Endstückes betrachtet voneinander beabstandet angeordnet sind.

Im einfachsten Fall besitzt der Dichtring einen kreisförmigen Querschnitt. Gemäß einer Weiterbildung ist jedoch ein langgestreckter Dichtringquerschnitt vorgesehen, bevorzugt derart, dass die Ausdehnung des Dichtringes in Längsrichtung des Endstückes wesentlich größer (z. B. um einen Faktor 2 oder mehr) als quer dazu ist.

Bei einem in einer Nut gelagerten Dichtring ist es bevorzugt, dass der Dichtring mit etwa 10 bis 40 % seiner Höhe aus der Nut herausragt.

In einer Ausführungsform ist vorgesehen, dass ein in das Profilschlauchende ragender Innenabschnitt des bzw. wenigstens eines der Endstücke in Längsrichtung betrachtet profiliert ist.

Abgesehen von einer Profilierung zur Bereitstellung der erwähnten Nuten kann hierbei alternativ oder zusätzlich insbesondere eine ein- oder mehrfache Abstufung des Innenabschnittes in Längsrichtung derart vorgesehen sein, dass der Querschnitt bzw. das Profil des Innenabschnittes sich so verjüngt, dass das Aufstecken des Profilschlauches vereinfacht ist.

Alternativ oder zusätzlich zu den erwähnten Dichtringen kann auch wenigstens ein in Umfangsrichtung umlaufender Vorsprung aus dem Material des Endstückes selbst gebildet sein. Auch in dieser Weise kann eine Dichtwirkung geschaffen werden. Falls das Endstück aus einem relativ festen Material, z. B. als gefrästes Metallteil, gefertigt ist, so wird mit dem in Umfangsrichtung umlaufenden Vorsprung im Allgemeinen zwar keine gute (Luft-)Dichtwirkung gegen den Profilschlauch geschaffen, jedoch vorteilhaft eine gewisse mechanische Fixierwirkung. Eine solche Fixierung kann z. B. ein Herausrutschen des Endstückes aus dem Profilschlauchende bei einem Hantieren (manuell oder automatisiert) mit dem Stützprofil verhindern.

In einer vorteilhaften Ausführungsform besitzt der erwähnte Innenabschnitt des Endstückes einen in Längsrichtung betrachtet ersten Bereich mit relativ großem Querschnitt und einen (bei aufgestecktem Profilschlauch) sich noch weiter im Schlauchinneren befindlichen zweiten Bereich mit demgegenüber kleinerem Querschnitt. Diese Bereiche können durch eine Abstufung und/oder Abschrägung verbunden sein. Der erste Bereich weist hierbei bevorzugt einen oder mehrere Dichtringe der oben erläuterten Art und der zweite Bereich bevorzugt wenigstens einen in Umfangsrichtung umlaufenden Vorsprung der oben erläuterten Art auf. Das erfindungsgemäße Verfahren zur Herstellung eines Stützprofils zum Abstützen eines von einem Faserverbundhalbzeug gebildeten Verstärkungsprofils in einem Aushärteprozess eines Verfahrens zur Herstellung eines Fahrzeugrumpfbauteils, bei welchem das Verstärkungsprofil an einer Oberfläche einer von einem Faserverbundhalbzeug gebildeten Rumpfschale angebunden wird, ist gekennzeichnet durch die Schritte:
a) Bereitstellen eines Profilschlauches, beispielsweise durch Abtrennen eines Abschnittes einer bestimmten Länge von einem quasi-endlosen Vorrat eines luftundurchlässigen Profilschlauches, und
b) lösbares Einstecken von Endstücken an den beiden Enden des bereitgestellten Profilschlauches, um mittels dieser Steckverbindung die Endstücke gegen den Profilschlauch abzudichten, wobei wenigstens eines der verwendeten Endstücke an einem aus dem betreffenden Profilschlauchende ragenden Außenabschnitt mit einer Luftdurchtrittsöffnung versehen ist, welche eine Gewindebohrung und eine darin eingeschraubte hülsenartige Luftdurchtrittsschraube umfasst, so dass beim Aushärteprozess eine Druckbeaufschlagung des Schlauchinnenraumes durch ein Loch einer am Außenabschnitt anliegenden luftundurchlässigen Folie hindurch ermöglicht ist, wobei das Loch umgebende Folienbereiche zwischen einem Schraubenkopf der Luftdurchtrittsschraube und dem Außenabschnitt eingeklemmt und hierdurch abgedichtet werden können. Falls im Schritt a) der Profilschlauch mit einem einendig bereits z. B. durch eine Verklebung oder Verschweißung etc. verschlossenen Profilschlauchende bereitgestellt wird, so genügt alternativ zum oben beschriebenen Schritt b) ein lösbares Einstecken eines Endstückes an dem anderen der beiden Enden des bereitgestellten Profilschlauches, um auch an diesem anderen Ende eine Abdichtung vorzusehen (mittels der Steckverbindung).

Die weiter oben hinsichtlich der Gestaltung des Profilschlauches sowie der Gestaltung der Endstücke bereits erläuterten Ausführungsformen und Besonderheiten können in analoger Weise, einzeln oder in Kombination auch zur Weiterbildung des erfindungsgemäßen Verfahrens zur Herstellung eines Stützprofils eingesetzt werden. Diese Weiterbildungen sind dementsprechend dadurch gekennzeichnet, dass im Verfahrensschritt a) bzw. im Verfahrensschritt b) ein entsprechend ausgestalteter Profilschlauch bzw. ein oder zwei entsprechend ausgestaltete Endstücke verwendet werden.

Gemäß eines weiteren Aspekts der vorliegenden Erfindung ist ein Verfahren zur Herstellung eines verstärkten Fahrzeugrumpfbauteils aus einer von einem Faserverbundhalbzeug gebildeten Rumpfschale und (wenigstens) einem von einem Faserverbundhalbzeug gebildeten Verstärkungsprofil vorgesehen, welches in einem Aushärteprozess des Herstellungsverfahrens an einer Oberfläche der Rumpfschale angebunden wird.

Gemäß der Erfindung wird bei diesem Bauteil-Herstellungsverfahren (wenigstens) ein Stützprofil der oben bereits beschriebenen Art zum Abstützen des (wenigstens) einen Verstärkungsprofils verwendet. Die Bauteilherstellung kann z. B. folgende Schritte aufweisen:
1. Auflegen der Rumpfschale (als Faserverbundhalbzeug, z. B. als Prepreg) auf eine Formfläche (Werkzeug), und Vorbereiten des oder der benötigten Verstärkungsprofile (als Faserverbundhalbzeug, z. B. bereits infiltriert und ausgehärtet), z. B. durch Aufbringen eines "Bonding-Films" an zur Anbindung an die Rumpfschale vorgesehenen Verstärkungsprofil-Fußabschnitten.
2. Einlegen des oder der benötigten Stützprofile in die betreffende Profilaussparung des oder der Verstärkungsprofile, und Auflegen der damit geschaffenen Verstärkungsprofil-Stützprofil-Kombination(en) in gewünschter Lage und Orientierung auf der Rumpfschale. Alternativ: Zunächst Auflegen des oder der Stützprofile auf die Rumpfschale, und erst dann Auflegen des oder der Verstärkungsprofile.
3. Herstellung eines die Rumpfschale samt Verstärkungsprofil(en) und Stützprofil(en) umgebenden, gegen die Umgebung luftdicht abgeschlossenen Raumes, z. B. durch Auflegen einer Vakuumfolie, Evakuieren dieses Raumes, und bevorzugt Durchführen einer Dichtigkeitsprüfung. Falls ein Autoklav verwendet wird, erfolgt die Evakuierung und Dichtigkeitsprüfung bevorzugt erst nach einer Verbringung der Anordnung in den Autoklaven.
4. Gegebenenfalls Infiltrieren der Rumpfschale und/oder des oder der Verstärkungsprofile (falls bzw. soweit erforderlich) mit flüssigem oder zähflüssigem Matrixmaterial, und Heizen zur Bewerkstelligung der Verbindung (und Aushärtung) der Komponenten.
5. Nach Abschluss des Aushärteprozesses: Entfernen des bzw. der Stützprofile aus dem durch "Co-Bonding" bzw. "Co-Curing" fertiggestellten Bauteil.

Insbesondere wenn das oder die für diese Faserverbundbauteilherstellung verwendeten Stützprofile zuvor mit einem neuen (nicht wiederverwendeten) Profilschlauch geschaffen werden, erübrigt sich in der Praxis zumeist eine aufwändige Vorprüfung auf Dichtigkeit und etwaige Oberflächenbeschädigungen des bzw. der Stützprofile, bevor diese auf die Rumpfschale aufgelegt werden. Vielmehr genügt in der Regel eine Dichtigkeitsprüfung unmittelbar vor dem eigentlichen Aushärteprozess (Heizen).

Abweichend von der vorstehend skizzierten Vorgehensweise könnten in einem ersten Schritt zunächst das oder die Verstärkungsprofile mit dem oder den Stützprofilen auf eine Formfläche (Werkzeug) aufgelegt werden, und erst anschließend die Rumpfschale.

Beim "Aushärteprozess" kann sowohl die Rumpfschale als auch das (wenigstens eine) Verstärkungsprofil ausgehärtet werden. Dies ist jedoch nicht zwingend. Beispielsweise kann auch eine der Komponenten "Rumpfschale" und "Verstärkungsprofil(e)" bereits teilweise oder sogar vollständig ausgehärtet sein, bevor der hier angesprochene Aushärteprozess durchgeführt wird. Wesentlich für die hier im Sinne eines "Co-Bonding" bzw. "Co-Curing" erfolgende Anbindung des oder der Verstärkungsprofile an die Rumpfschale ist, dass zu Beginn des Aushärteprozesses an der Grenzfläche zwischen diesen beiden Komponenten noch flüssiges oder zähflüssiges Matrixmaterial vorhanden ist. In einer Ausführungsform ist z. B. vorgesehen, dass beim Aushärteprozess ein oder mehrere bereits vollständig ausgehärtete Verstärkungsprofile an die nicht oder nur teilweise ausgehärtete Rumpfschale (insbesondere z. B. als Prepreg ausgebildet) angebunden werden. Alternativ oder zusätzlich zu einer nicht oder jedenfalls nicht vollständig ausgehärteten Komponente kann schließlich auch eine zwischen den Komponenten zwischengefügte Matrixmaterialkomponente ("Klebefilm", z. B. aus Epoxidharz) vorgesehen sein.

In einer Ausführungsform des Herstellungsverfahrens erfolgt die Anbindung des Verstärkungsprofils an die Rumpfschale unter Evakuierung eines die Rumpfschale und das Verstärkungsprofil umgebenden, gegen die Umgebung luftdicht abgeschlossenen Raumes, welcher zumindest auf der dem Verstärkungsprofil zugewandten Seite der Rumpfschale insbesondere durch eine luftundurchlässige Folie begrenzt sein kann.

Ein derartiger Unterdruck- bzw. Vakuum-unterstützter Aushärteprozess ist in der Faserverbundtechnologie an sich bekannt. Gemäß der Erfindung ist hierbei jedoch die Art und Weise der Abstützung des Verstärkungsprofils (gegebenenfalls mehrerer Verstärkungsprofile) besonders vorteilhaft (unter Verwendung wenigstens eines erfindungsgemäßen Stützprofils) ausgestaltet.

Im Rahmen der Erfindung kann vorteilhaft auf alle an sich bekannten Weiterbildungen des Aushärteprozesses als solchem (gegebenenfalls kombiniert mit einer vorausgehenden Matrixmaterial-Infiltration) zurückgegriffen werden. Lediglich beispielhaft sei z. B. erwähnt, dass das erfindungsgemäße Stützprofil auch bei dem weiterentwickelten Vakuum-unterstützten Infiltrations- und Aushärteprozess eingesetzt werden kann, welcher in der eingangs erwähnten DE 101 56 123 B4 beschrieben ist. Weitere Beispiele von an sich bekannten, für einen Einsatz der vorliegenden Erfindung geeigneten Verfahren sind z. B. Spritzpressen (RTM, "resin transfer moulding"), Vakuum-Infusion (z. B. VAP, VARI etc.) und deren Weiterentwicklungen (z. B. SLI, LRI, BP-RTM) etc.

In einer bevorzugten Weiterbildung des Herstellungsverfahrens wird der Aushärteprozess in einem Autoklaven durchgeführt. Insbesondere in diesem Fall ist die oben bereits erwähnte Ausführungsform des Stützprofils interessant, bei welcher im Falle einer beiderendigen Bestückung mit Endstücken wenigstens eines dieser Endstücke mit einer Luftdurchtrittsöffnung zur Beaufschlagung des Schlauchinnenraumes mit einem vorbestimmten Druck versehen ist. Eine besonders einfache Verfahrensvariante ergibt sich, wenn dieser vorbestimmte Druck dem im Autoklaven herrschenden Druck entspricht, was z. B. mit der bereits erwähnte, hülsenartigen, in eine Gewindebohrung des betreffenden Endstückes eingeschraubten Luftdurchtrittsschraube realisierbar ist, die in den unter Druck gesetzten Raum des Autoklaven hineinragt.

Die Erfindung wird nachfolgend anhand von Ausführungsbeispielen mit Bezug auf die beigefügten Zeichnungen weiter beschrieben. Es stellen dar:
- **Fig. 1**: eine schematische Darstellung einer Anordnung zur Herstellung eines verstärkten Fahrzeugrumpfbauteils, von der Seite betrachtet,
- **Fig. 2**: einen Teil der Anordnung von Fig. 1, von oben betrachtet,
- **Fig. 3**: ein Detail aus Fig. 2,
- **Fig. 4 bis 6**: verschiedene perspektivische Ansichten eines bei einem Herstellungsverfahren gemäß der Fig. 1 bis 3 verwendbaren Endstückes gemäß einer Ausführungsvariante, und
- **Fig. 7 bis 9**: zeigt verschiedene perspektivische Ansichten eines bei einem Herstellungsverfahren gemäß der Fig. 1 bis Fig. 3 verwendbaren Endstückes (nicht Bestandteil der vorliegender Erfindung).

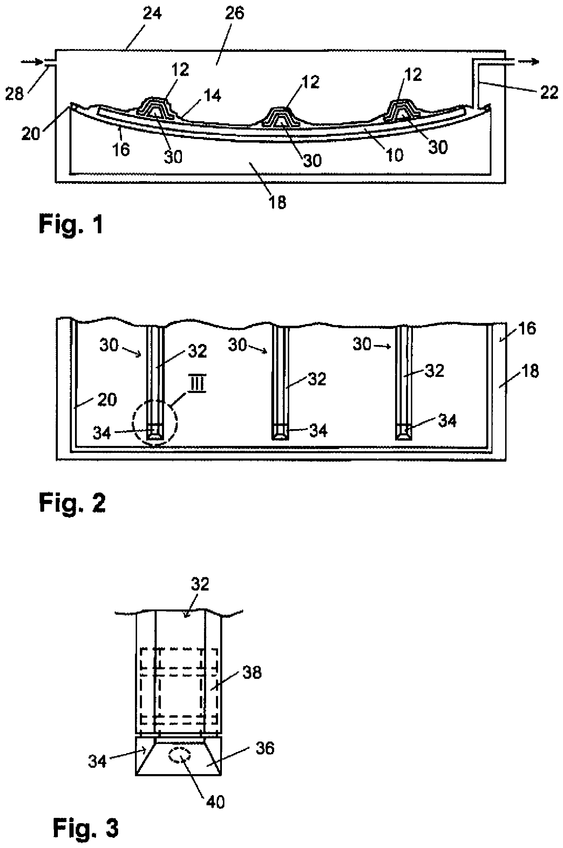

Fig. 1 zeigt eine Anordnung zur Herstellung eines Fahrzeugrumpfbauteils (z. B. Flugzeugrumpfbauteil) aus einer von einem Faserverbundhalbzeug gebildeten Rumpfschale 10 und drei ebenfalls jeweils von Faserverbundhalbzeugen gebildeten Verstärkungsprofilen 12.

Im dargestellten Ausführungsbeispiel ist die Rumpfschale 10 aus einem vorimprägnierten CFK-Material ("Prepreg") gebildet. Die Rumpfschale 10 besitzt eine Fläche von mehreren Quadratmetern. Diese Fläche ist mehr oder weniger kompliziert gekrümmt. In der schematischen Schnittansicht von Fig. 1 ist z. B. eine Querkrümmung der Rumpfschale 10 gut ersichtlich. Die Verstärkungsprofile 12 sind im dargestellten Ausführungsbeispiel als bereits vollständig ausgehärtete Faserverbundkomponenten vorgesehen, welche an der in Fig. 1 oberen Oberfläche der Rumpfschale 10 in deren Längsrichtung verlaufend aufgelegt sind. Die Verstärkungsprofile 12 bilden hierbei am fertigen Fahrzeugrumpfbauteil so genannte "Stringer" (Längsverstärkungsprofile) an der Innenseite der Rumpfschale. Ganz allgemein könnten die erfindungsgemäße angebundenen Verstärkungsprofile alternativ oder zusätzlich auch "Spanten" bilden.

Die Verstärkungsprofile 12 sind im dargestellten Ausführungsbeispiel so genannte "Omega-Profile". Wie aus Fig. 1 ersichtlich besitzt der Querschnitt dieser Profile zwei voneinander beabstandete, jeweils zur Anlage an der Oberfläche der Rumpfschale 10 kommende Fußabschnitte, welche über einen bogenartig, im Abstand von der Rumpfschalenoberfläche verlaufenden Querschnittsbereich miteinander verbunden sind. Der bogenartige Querschnittsbereich setzt sich wie dargestellt aus zwei unmittelbar an den Fußabschnitten angebundenen und geradlinig schräg nach oben verlaufenden Schrägabschnitten sowie einem parallel zu den Fußabschnitten verlaufenden Mittelabschnitt zusammen (der die oberen Enden der beiden Schrägabschnitte miteinander verbindet).

Bei einem nachfolgend noch erläuterten thermischen Aushärteprozess wird ein in der Rumpfschale 10 (Prepreg) enthaltenes Epoxidharzsystem und somit die Rumpfschale 10 ausgehärtet, wobei gleichzeitig die auf der zunächst noch "nassen" Rumpfschalenfläche aufliegenden Fußabschnitte der Verstärkungsprofile 12 und somit diese Verstärkungsprofile 12 an die Rumpfschale 10 angebunden werden ("Co-Bonding"- bzw. "Co-Curing"-Prozess).

Gegebenenfalls kann zur Verbesserung dieser Anbindung auch zuvor ein Klebefilm aus flüssigem bzw. zähflüssigem Epoxidharz oder dergleichen an den Fußabschnitten der Verstärkungsprofile 12 oder an der Oberfläche der Rumpfschale 10 (zumindest im Bereich der Fußabschnitte) aufgebracht, z. B. aufgebügelt werden. Zur Schaffung einer besonders guten Verbindung zwischen der Rumpfschale 10 und den Verstärkungsprofilen 12 erfolgt die Anbindung unter Evakuierung eines die Rumpfschale 10 und die Verstärkungsprofile 12 umgebenden Raumes, welcher auf der in Fig. 1 oberen Seite durch eine luftundurchlässige Folie 14 begrenzt wird. Auf der unteren Seite wird dieser Raum durch eine Formfläche 16 eines Formwerkzeuges bzw. einer Form 18 begrenzt. Die Evakuierung des Raumes erfolgt über eine Entlüftungsleitung 22 zu einer (nicht dargestellten) Vakuumpumpe. Der Rand der luftundurchlässigen Folie 14 ist umlaufend mittels einer am Rand der Formfläche 16 angeordneten Dichtung 20 gegen die Form 18 abgedichtet. Durch die Evakuierung werden die Verstärkungsprofile 12 während des Aushärteprozesses vorteilhaft gegen die Rumpfschale 10, und diese Rumpfschale 10 wiederum gegen die Formfläche 16 gepresst, so dass eine besonders innige Verbindung zwischen den Verstärkungsprofilen 12 und der Rumpfschale 10 sowie einen hohe Formgenauigkeit für die Rumpfschale 10 erzielt werden.

Im dargestellten Ausführungsbeispiel wird die Pressung der Komponenten 10, 12 noch weiter dadurch unterstützt bzw. erhöht, dass die bis hierher beschriebene Anordnung vor Beginn des (thermischen) Aushärteprozesses in einen Autoklaven (Druckkammer) 24 gebracht wird, in dessen Innneraum 26 beim Aushärteprozess ein gegenüber dem atmosphärischen Druck erhöhter Druck von z. B. etwa 5 bis 10 bar eingestellt wird. Der Druck wird während des Aushärteprozesses über eine Druckleitung 28 eingestellt, die in den Innenraum 26 des Autoklaven 24 mündet.

Bevor jedoch die eigentliche Aushärtung, hierdurch Heizen des Innenraumes 26, in Gang gesetzt wird, erfolgt bevorzugt eine Dichtigkeitsprüfung hinsichtlich der Abdichtung des Raumes unterhalb der Vakuumfolie 14 (durch die Dichtung 20 und die Dichtringe 44) und der Abdichtung der Schlauchinnenräume (durch die Steckverbindungen).

Während des Aushärteprozesses werden zum Abstützen der Verstärkungsprofile 12 im dargestellten Ausführungsbeispiel im Querschnitt trapezförmige Stützprofile 30 verwendet, die wie in Fig. 1 dargestellt jeweils in einem der Zwischenräume zwischen den Verstärkungsprofilen 12 und der Rumpfschale 10 angeordnet sind. Ohne derartige Stützprofile würden die Verstärkungsprofile 12 durch den hohen Druck im Autoklaven 24 kollabieren oder zumindest verformt werden.

Nach Abschluss des Aushärteprozesses wird die Anordnung der (nun ausgehärteten) Komponenten wieder aus dem Autoklaven 24 entfernt und werden die Stützprofile 30 wieder aus dieser Anordnung entfernt, hier z. B. in Längsrichtung der Rumpfschale 10 aus den Zwischenräumen herausgezogen. Dies lässt sich z. B. dadurch vereinfachen, dass die Schlauchinnenräume zuvor über die Lufteintrittsöffnungen evakuiert werden, um deren Querausdehnung zu verkleinern bzw. deren Entfernungswiderstand zu reduzieren. Zu bedenken ist hierbei, dass je nach konkretem Anwendungsfall die Schläuche über eine Distanz von mehr als 10 m aus dem ausgehärteten Konstrukt herauszuziehen sind. Falls für ein solches Herausziehen der Schläuche eine Evakuierung der Schlauchinnenräume nicht erforderlich ist, etwa aufgrund einer hinreichend großen Flexibilität der Schläuche, so kommt anstatt einer Evakuierung der Schlauchinnenräume auch in Betracht, die gegebenenfalls distal angeordneten Endstücke zunächst von den jeweiligen Profilschlauchenden abzuziehen, so dass beim nachfolgenden Herausziehen der Profilschläuche diese Endstücke nicht mit durch das ausgehärtete Konstrukt hindurchgezogen werden müssen.

Der Aufbau und die Funktion der Stützprofile 30 wird nachfolgend mit Bezug auf die Fig. 2 und 3 näher erläutert.

Fig. 2 zeigt einen Teil der Anordnung von Fig. 1 von oben, wobei jedoch zur deutlicheren Darstellung der Stützprofile 30 in Fig. 2 der Autoklav 24 und die Folie 14 weggelassen sind.

Jedes der Stützprofile 30 besteht aus einem luftundurchlässigen Profilschlauch 32 (mit trapezförmigem Querschnitt) und an den beiden Profilschlauchenden lösbar eingesteckten und mittels dieser Steckverbindung gegen den Profilschlauch 32 abgedichteten Endstücken 34. In der teilweisen Darstellung von Fig. 2 ist für jeden der Profilschläuche 32 jeweils nur eines der Endstücke 34 zu erkennen.

Fig. 3 zeigt den in Fig. 2 mit III gekennzeichneten Bereich am Ende eines Profilschlauches 32 detaillierter. Der Profilschlauch 32 ist im dargestellten Ausführungsbeispiel als ein extrudierter Elastomerschlauch (z. B. Silikonschlauch) mit dem erwähnten trapezförmigen Querschnittsprofil ausgebildet, wobei der Profilschlauch 32 z. B. vorteilhaft als ein in passender Länge von einem Schlauchvorrat abgetrennter Abschnitt bereitgestellt sein kann. Das Endstück 34 ist z. B. als gefrästes Aluminiumteil (alternativ z. B. Kunststoff-Formteil) gefertigt und besitzt einen aus dem Profilschlauchende ragenden Außenabschnitt 36 und einen in das Profilschlauchende ragenden Innenabschnitt 38 (in Fig. 3 gestrichelt). Außerdem ist in Fig. 3 gestrichelt noch eine optional vorgesehene Luftdurchtrittsöffnung 40 dargestellt, über welche eine Druckbeaufschlagung des Schlauchinnenraumes beim Aushärteprozess ermöglicht wird.

Wenn der Aushärteprozess nicht in einem Autoklaven sondern unter Umgebungsdruck (1 bar) erfolgt, so könnten die Stützprofile 30 beiderendig jeweils durch ein geschlossenes Endstück 34 (ohne Öffnung 40) abgeschlossen werden. Insbesondere wenn jedoch die Aushärtung unter erhöhtem Umgebungsdruck (in einem Autoklaven) durchgeführt wird, so empfiehlt sich eine Druckbeaufschlagung der jeweiligen Schlauchinnenräume mit einem Druck, der mindestens dem im Druckraum 26 herrschenden Druck entspricht. Daher ist für jeden Profilschlauch 32 an (zumindest) einem Ende bevorzugt ein diese Druckbeaufschlagung realisierendes Endstück 34 mit einer solchen Öffnung 40 vorgesehen. In einer bevorzugten Ausführungsform jedes Stützprofils 30 besitzt dieses an einem Ende ein Endstück 34 mit einer Öffnung 40 und am anderen Ende ein Endstück 34 ohne eine solche Öffnung 40. Abweichend vom dargestellten Ausführungsbeispiel könnten Schlauchenden, die in diesem Beispiel mittels "geschlossener" Endstücke (ohne Öffnung 40) verschlossen sind, auch anderweitig verschlossen sein bzw. verschlossen werden, beispielsweise durch eine Verklebung, eine Verschweißung oder dergleichen.

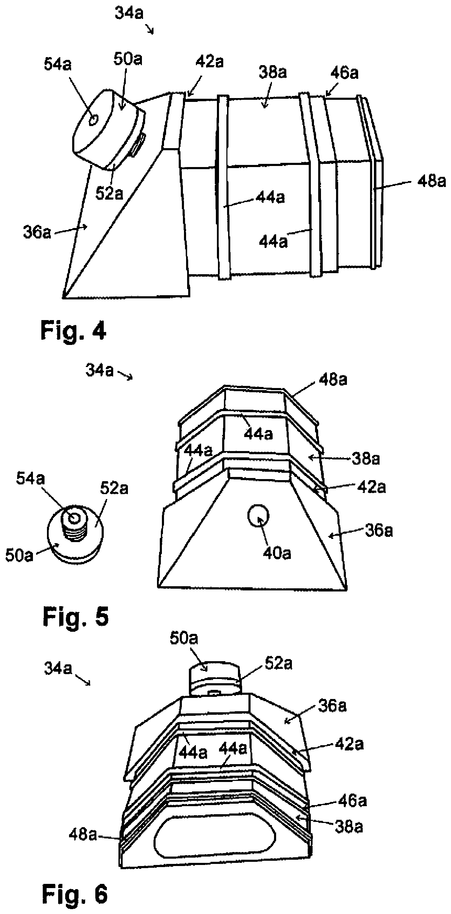

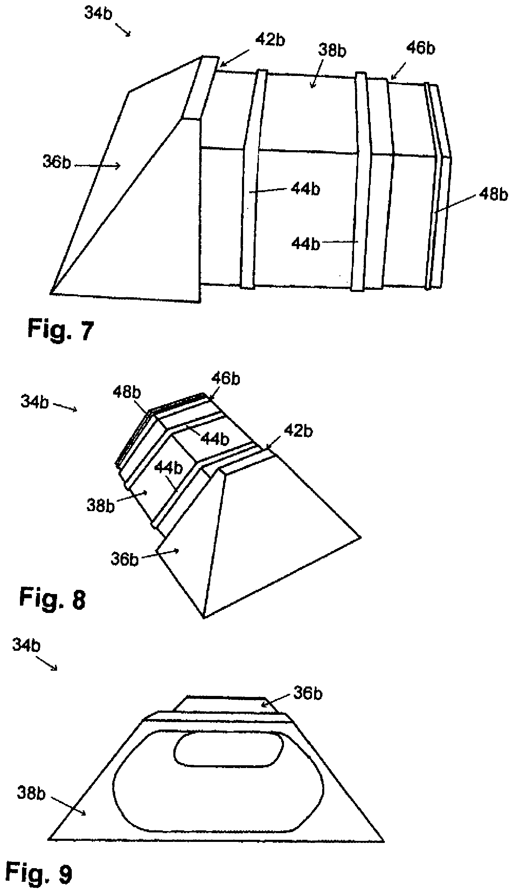

Nachfolgend werden mit Bezug auf die Fig. 4 bis 6 ein Ausführungsbeispiel eines "offenen Endstückes" 34a und mit Bezug auf die Fig. 7 bis 9 ein Ausführungsbeispiel eines "geschlossenen Endstückes" 34b erläutert. Diese Endstücke 34a, 34b können z. B. als das "Endstück 34" der oben beschriebenen Anordnung (Fig. 1 bis 3) eingesetzt werden.

Die Fig. 4 bis 6 zeigen ein Endstück 34a mit einem Außenabschnitt 36a und einem Innenabschnitt 38a. Der Innenabschnitt 38a (in Verwendungssituation in das betreffende Profilschlauchende hineinragend), besitzt einen gegenüber dem Außenabschnitt 36a verkleinerten (verjüngten) Querschnitt, so dass bei aufgestecktem Profilschlauch 32 dessen Profil vom Außenabschnitt 36 bündig fortgesetzt wird. Dies besitzt den Vorteil, dass die beim Aushärteprozess das Stützprofil überdeckende Folie 14 auch an den Enden jedes Stützprofils 30 satt aufliegt. Der Innenabschnitt 38a schließt sich hierfür über eine den Querschnitt verkleinernde Abstufung 42a an den Außenabschnitt 36a an, wobei die Abstufung 42a mit einer Dimensionierung entsprechend der Stärke des am Endstück 34a aufgesteckten Profilschlauches ausgebildet ist. Die Wandstärke des Profilschlauches kann z. B. in der Größenordnung von einigen mm liegen.

Ebenfalls im Hinblick auf eine satte Auflage der Folie 14 besitzt der Außenabschnitt 36a insbesondere auch an seinem in Fig. 4 linken Ende eine Schrägfläche, an welcher auch die bereits erwähnte Luftdurchtrittsöffnung 40a ausgebildet ist.

Der Innenabschnitt 38a ist im dargestellten Ausführungsbeispiel mit zwei in Längsrichtung des Endstückes 34a betrachtet beabstandeten Dichtringen 44a versehen, welche in der Verwendungssituation das Endstück 34a gegen die innere Mantelwand des aufgesteckten Profilschlauches 32 abdichten.

Jeder dieser aus einem Elastomermaterial gebildeten Dichtringe 44a besitzt einen etwa rechteckigen Querschnitt und ist in eine im Bereich des Innenabschnittes 38a geeignet dimensionierte Umfangsnut eingelegt. Im dargestellten Ausführungsbeispiel sind diese Nuten im Querschnitt betrachtet rechteckig, mit einer Tiefe in der Größenordnung von etwa 1 mm, wobei die Querschnittshöhe jedes der Dichtringe 44a jeweils etwas größer als die Nutentiefe bemessen ist, so dass die Dichtringe 44a mit einigen 1/10 mm aus den zugehörigen Nuten hervorstehen.

Abgesehen von dieser die Nuten für die Dichtringe 44a ausbildenden Profilierung des Innenabschnittes 38a ist im dargestellten Ausführungsbeispiel als Profilierung (in Längsrichtung betrachtet) eine weitere Abstufung 46a vorgesehen, welche den Querschnitt des Innenabschnittes 38a zum Schlauchinneren hin weiter verjüngt. Im Bereich des schlauchseitigen Endes dieses weiter verjüngten Abschnittes ist ein am Umfang umlaufend sich erstreckender Vorsprung 48a ausgebildet.

Der Vorsprung 48a ist so dimensioniert, dass dieser vorteilhaft eine mechanische Fixierung des aufgesteckten Profilschlauchendes bewirkt und somit verhindert, dass bei einer Handhabung des Stützprofils das eingesteckte Endstück 34a wieder unbeabsichtigt aus dem betreffenden Profilschlauchende herausrutscht. Ein solcher aus dem Material (hier z. B. Aluminium) des betreffenden Endstückes ausgebildeter Umfangsvorsprung ist bevorzugt (wie dargestellt) in unmittelbarer Nähe des schlauchseitigen Endes des Innenabschnittes 38a angeordnet.

Die Luftdurchtrittsöffnung 40a ist im dargestellten Ausführungsbeispiel als eine Gewindebohrung zum Einschrauben einer hülsenartigen Luftdurchtrittsschraube 50a ausgebildet, um die bereits erwähnte Druckbeaufschlagung des Schlauchinnenraumes beim Aushärteprozess zu realisieren. Hierfür durchgreift ein mit Außengewinde versehener Schaftabschnitt der Schraube 50a ein Loch in der (in den Fig. 4 bis 6 nicht dargestellten) luftundurchlässigen Folie 14. Ein Festschrauben der Schraube 50a bewirkt, dass die dieses Folienloch umgebenden Folienbereiche zwischen einem verbreiterten Kopf der Schraube 50a und der in Fig. 4 am linken Ende ersichtlichen Schrägfläche eingeklemmt und gegen diese Schrägfläche abgedichtet werden. Die Schraube 50a ist zur einfachen Betätigbarkeit bevorzugt mit einer Rändelung am Schraubenkopf ausgebildet und zur Verbesserung der Abdichtwirkung mit einer geeigneten Dichtungsscheibe 52a (z. B. aus Elastomermaterial) versehen. Zum Luftdurchtritt (bzw. Druckausgleich) ist die Schraube 50a mit einer zentralen, in Schraubenlängsrichtung verlaufenden Bohrung 54a versehen.

Die Fig. 7 bis 9 (nicht Bestandteil der Erfindung) zeigen
eines Endstückes 34b, welches in Aufbau und Funktion im Wesentlichen dem bereits beschriebenen Endstück 34a entspricht. Lediglich die bei dem Endstück 34a vorgesehene Luftdurchtrittsöffnung 40a (samt zugehöriger Luftdurchtrittsschraube 50a) ist bei der "geschlossenen Variante" des Endstückes 34b nicht vorgesehen.

In den Fig. 7 bis 9 sind gleichwirkende Komponenten mit den gleichen Bezugszahlen (wie in den Fig. 4 bis 6) gekennzeichnet, jedoch jeweils ergänzt durch einen kleinen Buchstaben "b" zur Unterscheidung von der Ausführungsvariante gemäß der Fig. 4 bis 6.

Das Endstück 34b bildet in seiner Verwendungssituation (mit aufgestecktem Profilschlauch 32) einen luftdichten Abschluss des Stützprofils 30 (Eine Belüftung des betreffenden Stützprofils 30 kann wie erläutert über ein am anderen Profilschlauchende eingestecktes "offenes Endstück" (34a) bewerkstelligt sein).

Bei dem in Fig. 1 veranschaulichten Verfahren zur Herstellung eines verstärkten Fahrzeugrumpfbauteils wird zunächst die von einem Faserverbundhalbzeug gebildete Rumpfschale 10 auf die Formfläche 16 der Form 18 aufgelegt. Optional wird sodann ein Klebefilm an der in Fig. 1 oberen Oberfläche der Rumpfschale 10 und/oder an den Fußabschnitten der vorgefertigten Verstärkungsprofile 12 aufgebracht. Dann werden die vorgefertigten Verstärkungsprofile 12 mitsamt den jeweils zugeordneten Stützprofilen 30 und schließlich die luftundurchlässige Folie 14 aufgelegt.

Vor oder nach dem Evakuieren des von der Folie 14 überdeckten Raumes wird das Formwerkzeug 18 zusammen mit den aufgelegten Komponenten in den Autoklaven 24 verbracht. Dann wird der Druckraum 26 des Autoklaven 24 unter Druck gesetzt. Zuvor oder nach dieser Druckbeaufschlagung erfolgt bevorzugt eine Dichtigkeitsüberprüfung der Gesamtanordnung. Wenn das Ergebnis dieser Dichtigkeitsprüfung zufriedenstellend ist, so wird der Druckraum 26 mittels einer (nicht dargestellten) Heizeinrichtung geheizt. Damit erfolgt die Aushärtung und Verbindung der Bauteilkomponenten. Dies bevorzugt gemäß eines vorbestimmten zeitlichen Temperatur- und Druckverlaufes.

Dann wird die Form 18 mit dem nun fertiggestellten Rumpfschalenbauteil (ausgehärtete und fest miteinander verbundene Komponenten 10, 12) aus dem Autoklaven 24 entfernt und die Folie 14 abgezogen.

Nach dem Entfernen der (wieder entlüfteten, gegebenenfalls evakuierten) Stützprofile 30 können zumindest deren Endstücke 34 (gegebenenfalls nach einer Reinigung derselben) vorteilhaft wiederverwendet werden, um damit neue Stützprofile für die Fertigung weiterer Rumpfschalenbauteile bereitzustellen.

Vorteilhaft kann hierfür zunächst ein Profilschlauch durch Abtrennen eines Abschnittes einer bestimmten Länge von einem quasi-endlosen Vorrat eines luftundurchlässigen Profilschlauches bereitgestellt werden, um sodann bereits gebrauchte Endstücke wieder lösbar an den beiden Enden des bereitgestellten Profilschlauches einzustecken.

Der Vorrat an Profilschlauch kann vorteilhaft z. B. auf einer Trommel aufgewickelt bevorratet sein, wobei die darauf aufgewickelte Länge des Profilschlauches (z. B. mehr als 100 m, insbesondere mehr als 200 m) die Abtrennung einer Vielzahl von Profilschlauchabschnitten mit den jeweils aktuell benötigten Längen ermöglicht. Die Bereitstellung der Stützprofile erfolgt damit gewissermaßen nach einem Baukastensystem, wobei die Länge der einzelnen Stützprofile vorteilhaft durch die entsprechende Konfektionierung des Schlauchvorrates beliebig und individuell wählbar ist.

Mit der Erfindung wird daher die Bereitstellung von zur FaserverbundbauteilHerstellung geeigneter Stützprofile wesentlich vereinfacht, was wiederum die Herstellungskosten für die betreffenden Faserverbundbauteile erheblich reduziert.

Mit der Erfindung und den oben beschriebenen Ausführungsbeispielen können insbesondere folgende Vorteile erzielt werden:
- Es ergibt sich eine gute und einfache Abdichtungsmöglichkeit gegenüber einer bei der Bauteilherstellung verwendeten Umhüllung wie z. B. Vakuumfolie.
- Durch den Einsatz von wiederverwendbaren Endstücken kann in einer Serienfertigung von verstärkten Faserverbund-Rumpfbauteilen vorteilhaft mit einem quasi-endlosen Schlauchmaterial (Schlauchvorrat) gearbeitet werden.
- Die Länge eines bereitzustellenden Stützprofils kann vorteilhaft in einfacher Weise an die Länge des betreffenden Verstärkungsprofils angepasst werden. Jedes Verstärkungsprofil kann auf dem betreffenden "Substrat" (z. B. Rumpfschale) an beliebiger Stelle enden.
- Der erfindungsgemäßen Bereitstellung von Stützprofilen liegt ein einfaches, modulares Steckkonzept zugrunde, bei welchem zumindest die (relativ teuren) Endstücke wiederverwendbar sind.
- Die Abdichtung der Profilschlauchinnenräume kann vorteilhaft ohne eine zusätzliche Abdichtungsmaßnahme (wie z. B. eine Verklebung) realisiert werden. Insbesondere durch Einsatz eines Autoklaven für den Aushärteprozess kann dennoch eine ausreichend gute Dichtwirkung der Steckverbindung gewährleistet werden.

## Patentansprüche

1. Stützprofil (30) zum Abstützen eines von einem Faserverbundhalbzeug gebildeten Verstärkungsprofils (12) in einem Aushärteprozess eines Verfahrens zur Herstellung eines Fahrzeugrumpfbauteils (10, 12), bei welchem das Verstärkungsprofil (12) an einer Oberfläche einer von einem Faserverbundhalbzeug gebildeten Rumpfschale (10) angebunden wird, umfassend
- einen luftundurchlässigen Profilschlauch (32), und
- wenigstens ein Endstück (34), welches an einem der beiden Profilschlauchenden lösbar eingesteckt und mittels dieser Steckverbindung gegen den Profilschlauch (32) abgedichtet ist, wobei ein aus dem Profilschlauchende ragender Außenabschnitt (36) dieses Endstückes (34) mit einer Luftdurchtrittsöffnung (40) zur Beaufschlagung des Schlauchinnenraumes beim Aushärteprozess mit einem vorbestimmten Druck versehen ist,
**dadurch gekennzeichnet, dass** die Luftdurchtrittsöffnung (40) eine Gewindebohrung und eine darin eingeschraubte hülsenartige Luftdurchtrittsschraube (50a) umfasst, so dass beim Aushärteprozess die Druckbeaufschlagung des Schlauchinnenraumes durch ein Loch einer am Außenabschnitt (36) anliegenden luftundurchlässigen Folie hindurch ermöglicht ist, wobei das Loch umgebende Folienbereiche zwischen einem Schraubenkopf der Luftdurchtrittsschraube (50a) und dem Außenabschnitt (36) eingeklemmt und hierdurch abgedichtet werden können.

2. Stützprofil (30) nach Anspruch 1, wobei an beiden Profilschlauchenden jeweils ein lösbar eingestecktes und mittels dieser Steckverbindung gegen den Profilschlauch (32) abgedichtetes Endstück (34) vorgesehen ist.

3. Stützprofil (30) nach Anspruch 1 oder 2, wobei ein aus dem Profilschlauchende ragender Außenabschnitt (36) des Endstückes (34) das Schlauchprofil (32) bündig fortsetzt.

4. Stützprofil (30) nach einem der vorangehenden Ansprüche, wobei ein aus dem Profilschlauchende ragender Außenabschnitt (36) des Endstückes (34) Schrägflächen zur Auflage einer im Aushärteprozess verwendeten luftundurchlässigen Folie (14) besitzt.

5. Stützprofil (30) nach einem der vorangehenden Ansprüche, wobei die Luftdurchtrittsschraube (50a) mit einer Rändelung am Schraubenkopf ausgebildet und/oder mit einer Dichtungsscheibe (52a) versehen ist.

6. Stützprofil (30) nach einem der vorangehenden Ansprüche, wobei ein in das Profilschlauchende ragender Innenabschnitt (38) des Endstückes (34) mit wenigstens einem Dichtring (44) zur Abdichtung gegen das aufgesteckte Profilschlauchende versehen ist.

7. Stützprofil (30) nach Anspruch 6, wobei der Dichtring (44) in eine am Endstück (34) ausgebildete Umfangsnut eingelegt ist.

8. Stützprofil (30) nach einem der vorangehenden Ansprüche, wobei ein in das Profilschlauchende ragender Innenabschnitt (38) des Endstückes (34) in Längsrichtung betrachtet profiliert ist.

9. Verfahren zur Herstellung eines Stützprofils (30) zum Abstützen eines von einem Faserverbundhalbzeug gebildeten Verstärkungsprofils (12) in einem Aushärteprozess eines Verfahrens zur Herstellung eines Fahrzeugrumpfbauteils, bei welchem das Verstärkungsprofil (12) an einer Oberfläche einer von einem Faserverbundhalbzeug gebildeten Rumpfschale (10) angebunden wird, umfassend die Schritte:
a) Bereitstellen eines Profilschlauches (32), insbesondere durch Abtrennen eines Abschnittes einer bestimmten Länge von einem quasi-endlosen Vorrat eines luftundurchlässigen Profilschlauches, und
b) lösbares Einstecken von Endstücken (34) an den beiden Enden des bereitgestellten Profilschlauches (32), um mittels dieser Steckverbindung die Endstücke (34) gegen den Profilschlauch (32) abzudichten,
**dadurch gekennzeichnet, dass** wenigstens eines der verwendeten Endstücke (34) an einem aus dem betreffenden Profilschlauchende ragenden Außenabschnitt (36) mit einer Luftdurchtrittsöffnung (40) versehen ist, welche eine Gewindebohrung und eine darin eingeschraubte hülsenartige Luftdurchtrittsschraube (50a) umfasst, so dass beim Aushärteprozess eine Druckbeaufschlagung des Schlauchinnenraumes durch ein Loch einer am Außenabschnitt (36) anliegenden luftundurchlässigen Folie hindurch ermöglicht ist, wobei das Loch umgebende Folienbereiche zwischen einem Schraubenkopf der Luftdurchtrittsschraube (50a) und dem Außenabschnitt (36) eingeklemmt und hierdurch abgedichtet werden können.

10. Verfahren zur Herstellung eines verstärkten Fahrzeugrumpfbauteils (10, 12) aus einer von einem Faserverbundhalbzeug gebildeten Rumpfschale (10) und wenigstens einem von einem Faserverbundhalbzeug gebildeten Verstärkungsprofil (12), welches in einem Aushärteprozess des Herstellungsverfahrens an einer Oberfläche der Rumpfschale (10) angebunden wird, **dadurch gekennzeichnet, dass** zum Abstützen des Verstärkungsprofils (12) beim Aushärteprozess ein Stützprofil (30) nach einem der Ansprüche 1 bis 8 verwendet wird.

11. Verfahren nach Anspruch 10, wobei der Aushärteprozess in einem Autoklaven durchgeführt wird.

## Claims

1. Supporting profiled element (30) for supporting a reinforcing profiled element (12) that is formed from a fibre composite semi-finished product in a curing procedure of a method for producing a vehicle body component (10, 12) in which the reinforcing profiled element (12) is attached to a surface of a body shell (10) that is formed from a fibre composite semi-finished product, said supporting profiled element comprising
- an air-impermeable profiled hose (32), and
- at least one end piece (34) that is plugged in a detachable manner on one of the two profiled hose ends and is sealed by means of this plug connection with respect to the profiled hose (32), wherein an outer section (36) of said end piece (34) that protrudes out of the profiled hose end is provided with an air passage aperture (40) for influencing the hose interior space with a predetermined pressure during the curing procedure,
**characterized in that** the air passage aperture (40) comprises a threaded hole and a sleeve-type air passage screw (50a) that is screwed into said threaded hole so that during the curing procedure it is rendered possible to influence the hose interior space with a pressure through a hole of an air-impermeable membrane that lies against the outer section (36), wherein the membrane regions that surround the hole can be clamped between a screw head of the air passage screw (50a) and the outer section (36) and as a consequence can be sealed.

2. Supporting profiled element (30) according to Claim 1, wherein in each case an end piece (34) is provided at the two profiled hose ends, said end piece being plugged in in a detachable manner and being sealed by means of this plug connection with respect to the profiled hose (32).

3. Supporting profiled element (30) according to Claim 1 or 2, wherein an outer section (36) of the end piece (34) that protrudes out of the profiled hose end extends the profiled hose (32) in a flush manner.

4. Supporting profiled element (30) according to any one of the preceding claims, wherein an outer section (36) of the end piece (34) that protrudes out of the profiled hose comprises inclined surfaces for supporting an air-impermeable membrane (14) that is used in the curing procedure.

5. Supporting profiled element (30) according to any one of the preceding claims, wherein the air passage screw (50a) is embodied with a knurling on the screw head and/or is provided with a sealing disc (52a).

6. Supporting profiled element (30) according to any one of the preceding claims, wherein an inner section (38) of the end piece (34) that protrudes into the profiled hose end is provided with at least one sealing ring (44) for sealing with respect to the profiled hose end that is plugged onto said end piece.

7. Supporting profiled element (30) according to Claim 6, wherein the sealing ring (44) is placed in a circumferential groove that is embodied on the end piece (34).

8. Supporting profiled element (30) according to any one of the preceding claims, wherein an inner section (38) of the end piece (34) that protrudes into the profiled hose end is profiled when viewed in the longitudinal direction.

9. Method for producing a supporting profiled element (30) for supporting a reinforcing profiled element (12) that is formed from a fibre composite semi-finished product in a curing procedure of a method for producing a vehicle body component in which the reinforcing profiled element (12) is attached to a surface of a body shell (10) that is formed from a fibre composite semi-finished product, said method comprising the steps:
a) providing a profiled hose (32), in particular by means of separating a section of a specific length from a virtually continuous supply of an air-impermeable profiled hose, and
b) plugging end pieces (34) in a detachable manner on the two ends of the provided profiled hose (32) in order to seal the end pieces (34) with respect to the profiled hose (32) by means of said plug connection,
**characterized in that** at least one of the end pieces (34) that are used is provided with an air passage aperture (40) on an outer section (36) that protrudes from the relevant profiled hose end and said air passage aperture comprises a threaded hole and a sleeve-type air passage screw (50a) that is screwed into said threaded hole so that during the curing procedure it is rendered possible to influence the hose interior space with pressure through a hole of an air-impermeable membrane that lies against the outer section (36), wherein the membrane regions surrounding the hole can be clamped and consequently sealed between a screw head of the air passage screw (50a) and the outer section (36).

10. Method for producing a reinforced vehicle body component (10, 12) from a body shell (10), said body shell being formed from a fibre composite semi-finished product, and at least one reinforcing profiled element (12) that is formed from a fibre composite semi-finished product, said reinforcing profiled element being attached in a curing procedure of the production method to a surface of the body shell (10), **characterized in that** during the curing procedure a supporting profiled element (30) according to any one of the claims 1 to 8 is used so as to support the reinforcing profile (12).

11. Method according to Claim 10, wherein the curing procedure is performed in an autoclave.

## Revendications

1. Profilé de support (30) destiné à supporter un profilé de renforcement (12) formé par un semi-produit composite à fibres pendant un processus de durcissement d'un procédé de fabrication d'un composant de fuselage de véhicule (10, 12), dans lequel le profilé de renforcement (12) est relié à une surface d'une coque de fuselage (10) formée par un semi-produit composite à fibres, comprenant :
- un flexible profilé (32) imperméable à l'air, et
- au moins un embout (34) lequel est inséré de manière amovible sur une des deux extrémités du flexible profilé et est étanchéifié par rapport au flexible profilé (32) au moyen de cette liaison insérée, dans lequel une section extérieure (36) de cet embout (34), faisant saillie hors de l'extrémité du flexible profilé, est munie d'une ouverture de passage d'air (40) pour mettre l'espace intérieur du flexible sous une pression prédéterminée lors du processus de durcissement,
**caractérisé en ce que** l'ouverture de passage d'air (40) comprend un trou taraudé et une vis de passage d'air (50a) en forme de douille, vissée dans celui-ci, de sorte que lors du processus de durcissement, la misse sous pression de l'espace intérieur du flexible est rendue possible à travers un trou d'un film adjacent à la section extérieure (36), imperméable à l'air, dans lequel des zones du film entourant le trou peuvent être serrées entre une tête de vis de la vis de passage d'air (50a) et la section extérieure (36) et peuvent être ainsi rendues étanches.

2. Profilé de support (30) selon la revendication 1, dans lequel un embout (34) inséré de manière amovible et étanchéifié par rapport au flexible profilé (32) au moyen de cette liaison insérée est respectivement ménagé sur les deux extrémités du flexible profilé.

3. Profilé de support (30) selon la revendication 1 ou 2, dans lequel une section extérieure (36) de l'embout (34), faisant saillie hors de l'extrémité du flexible profilé, continue le profilé du flexible (32) de manière affleurée.

4. Profilé de support (30) selon l'une quelconque des revendications précédentes, dans lequel une section extérieure (36) de l'embout (34), faisant saillie hors de l'extrémité du flexible profilé, possède des surfaces obliques pour l'application d'un film (14) imperméable à l'air, utilisé pendant le processus de durcissement.

5. Profilé de support (30) selon l'une quelconque des revendications précédentes, dans lequel la vis de passage d'air (50a) est réalisée avec un moletage sur la tête de vis et/ou est munie d'une bague d'étanchéité (52a).

6. Profilé de support (30) selon l'une quelconque des revendications précédentes, dans lequel une section intérieure (38) de l'embout (34), faisant saillie dans l'extrémité du flexible profilé, est munie d'au moins une bague d'étanchéité (44) pour l'étanchéification par rapport à l'extrémité du flexible profilé rapportée.

7. Profilé de support (30) selon la revendication 6, dans lequel la bague d'étanchéité (44) est posée dans une rainure circonférentielle réalisée sur l'embout (34).

8. Profilé de support (30) selon l'une quelconque des revendications précédentes, dans lequel une section intérieure (38) de l'embout (34), faisant saillie dans l'extrémité du flexible profilé, est profilée en vue en direction longitudinale.

9. Procédé de fabrication d'un profilé de support (30) destiné à supporter un profilé de renforcement (12) formé par un semi-produit composite à fibres pendant un processus de durcissement d'un procédé de fabrication d'un composant de fuselage de véhicule, dans lequel le profilé de renforcement (12) est relié à une surface d'une coque de fuselage (10) formée par un semi-produit composite à fibres, comprenant les étapes :
a) fourniture d'un flexible profilé (32), notamment par coupure d'une section d'une longueur déterminée d'une réserve quasi continue d'un flexible profilé imperméable à l'air, et
b) insertion amovible d'embouts (34) sur les deux extrémités du flexible profilé (32) fourni, afin d'étanchéifier les embouts (34) par rapport au flexible profilé (32) au moyen de cette liaison insérée,
**caractérisé en ce qu'**au moins un des embouts (34) utilisés est muni d'une ouverture de passage d'air (40) sur une section extérieure (36) faisant saillie hors de l'extrémité concernée du flexible profilé, qui comprend un trou taraudé et une vis de passage d'air (50a) en forme de douille, vissée dans celui-ci, de sorte que lors du processus de durcissement, une mise sous pression de l'espace intérieur du flexible est rendue possible à travers un trou d'un film adjacent à la section extérieure (36), imperméable à l'air, dans lequel des zones du film entourant le trou peuvent être serrées entre une tête de vis de la vis de passage d'air (50a) et la section extérieure (36) et peuvent être ainsi rendues étanches.

10. Procédé de fabrication d'un composant de fuselage de véhicule (10, 12) renforcé constitué d'une coque de fuselage (10) formée par un semi-produit composite à fibres et par au moins un profilé de renforcement (12) formé par un semi-produit composite à fibres, lequel est relié à une surface de la coque de fuselage (10) pendant un processus de durcissement du procédé de fabrication, **caractérisé en ce qu'**un profilé de support (30) selon 1"une quelconque des revendications 1 à 8 est utilisé pour supporter le profilé de renforcement (12) pendant le processus de durcissement.

11. Procédé selon la revendication 10, dans lequel le processus de durcissement est réalisé dans un autoclave.
